# EUROPEAN PATENT APPLICATION

(11) **EP 3 354 680 A1**
(43) Date of publication of application: **01.08.2018**
(21) Application number: 18153491.8
(22) Date of filing: 25.01.2018
(51) Int. Cl.: C08J 5/18, B32B 9/00, C04B 26/00, C08K 3/34, C08L 23/06, C08L 23/12, D21H 27/30, C08L 67/02, C08K 3/26

(54) **POLYETHYLENE TEREPHTHALATE CONTAINING COMPOSITE FILM AND PREPARATION METHOD AND USE THEREOF**

(30) Priority: 26.01.2017 TW 106103380
(71) Applicant: Taiwan Lung Meng Technology Co., Ltd., 743 Tainan City (TW)
(72) Inventor: LIANG, Shih-Huei, 743 Tainan City (TW)
(74) Representative: J A Kemp

(57) **Abstract**

The present invention provides a composite film containing polyethylene terephthalate, which comprises inorganic mineral powder, polyethylene terephthalate, an auxiliary plastic, and an auxiliary agent. The present invention also provides a method of preparing the composite film, which comprises internally mixing inorganic mineral powder, polyethylene terephthalate, an auxiliary plastic, and an auxiliary agent to form a composite soft material; configuring the composite soft material to be in a sheet shape; and stretching the composite soft material to form a composite film.

## Description

### Field of the Invention

The present invention relates to a composite film and a preparation method and use thereof, and particularly to a polyethylene terephthalate containing composite film and a preparation method and use thereof.

### Description of the Prior Art

Most commercially available liquid beverages are packaged in bottles formed of polyethylene terephthalate (PET), such as bottled mineral water and bottled soft drinks. After drinking the beverages, the bottles will be discarded. The discarded bottles will normally be recycled and processed by a professional recycling factory so that they can be reused.

Typically, in a professional recycling factory, the recycled PET bottles will be shattered by using a powerful industrial shredder to form small PET fragments. The small PET fragments will be washed and dried and delivered to a spinning factory for forming filaments (polyester fibers). The filaments will then be spun into yarns, and the yarns will be woven into polyester clothing so that the discarded PET bottles can be recycled and reused. However, the amounts of the discarded PET bottles are far greater than the demand of using the recycled PET bottles for forming polyester clothing. Therefore, there is a need to find other ways to recycle and reuse the discarded PET bottles.

In recent years, polypropylene (PP) or polyethylene (PE) synthetic paper has been developed to replace traditional wood pulp paper in order to support environment protection. However, this kind of synthetic paper has the following disadvantages of (1) high cost, (2) poor stiffness due to lacking fibers, and (3) low heat resistance, so it cannot be used as photocopy paper (copy paper), printed paper, etc. In particular, 60g to 100g PP or PE synthetic paper can only be printed by using a specific rotary printing machine, but not a commercially used lithographic printing machine. Therefore, this kind of plastic synthetic paper is difficult to be used as copy paper or textbook paper and cannot be used widely. In view of the disadvantages of the conventional plastic synthetic paper as described above, there is a need to develop a new and improved synthetic paper.

### Summary of the Invention

It is a principle object of this invention to provide a polyethylene terephthalate containing composite film, which comprises inorganic mineral powder, polyethylene terephthalate, an auxiliary plastic, and an auxiliary agent.

Another object is to provide a synthetic film comprising the aforementioned composite film and one or more plastic layers disposed on an upper surface and/or a lower surface of the composite film.

Still another object is to provide a synthetic film comprising the aforementioned composite film, and one or more functional coating layers disposed on an upper surface and/or a lower surface of the composite film. The functional coating layer may be an antistatic coating layer or an ink-absorbing coating layer.

Yet another object is to provide a method of preparing a composite film, which comprises internally mixing inorganic mineral powder, polyethylene terephthalate, an auxiliary plastic, and an auxiliary agent to form a composite soft material; configuring the composite soft material to be in a sheet shape; and stretching the composite soft material to form the composite film.

In one embodiment, the method for preparing the composite film includes the use of an apparatus including an internal mixer, three sets of extruders, and a three-layer T-shaped die. The method mainly comprises mixing and heating the components of an inorganic mineral powder, polyethylene terephthalate, an auxiliary plastic, and an auxiliary agent by using an internal mixer so that the polyethylene terephthalate and the auxiliary plastic can be melted to form a hot melt plastic, and the hot melt plastic can be stirred with the inorganic mineral powder; and then squeezing and kneading the mixture to form a composite soft material. Then, the composite soft material can be directly fed into an extruder and can be pushed into the middle channel of the three-layer T-shaped die by using an extrusion screw.

The middle channel can be in the shape of a hanger, so the discharge of the composite soft material can be uniformly fed into a sheet-shaped nozzle. At the same time, additional melting plastics (such as polyethylene terephthalate) can be respectively fed and extruded into an upper channel and a lower channel, both of which may be in the shape of a hanger, of the three-layer T-shaped die by using additional two extruders or an additional extruder, and then pushed into the sheet-shaped nozzle of the three-layer T-shaped die. Hence, the melting plastics can be combined with the composite soft material of the middle channel in the sheet-shaped nozzle for forming a three-layer composite soft material.

The composite soft material in a sheet shape that is extruded from the nozzle of the three-layer T-shaped die can be introduced into a one-way stretching machine, and the material can be longitudinally stretched many times to, for example, about 4 to about 6.5 times the original dimension. The material can be further introduced into a transverse stretching machine, and can be transversely stretched many times to, for example, about 4 to about 6.5 times the original dimension so as to form a biaxially stretched composite film.

Thereafter, the composite film can be introduced into a double-sided coating machine. After the surface of the film is corona-treated, a double-sided coating solution can be applied to the film, and then the film can be dried and wound by using a winding machine so as to form a composite film. The thickness of the film can be in the range of about 50 µm to about 160 µm, and the density of the film can be in the range of about 0.70 g/cm³ to about 1.2 g/cm³.

The composite film of the present invention can replace the traditional culture paper made of wood pulp, such as black and white copy paper, color copy paper, printed paper, notebooks and brochures, and is also suitable for use in gravure printing, letterpress printing, lithography printing, screen printing, commercially used eight-color high-speed double-sided rotary printing, etc.

### Brief description of the Drawings

Fig. 1 illustrates a cross-sectional view of a composite film according to an embodiment of the present invention.
Fig. 2 illustrates a cross-sectional view of a composite film according to another embodiment of the present invention.
Fig. 3 illustrates a cross-sectional view of a composite film according to another embodiment of the present invention.
Fig. 4 illustrates a cross-sectional view of a composite film according to another embodiment of the present invention.

### Detailed Description

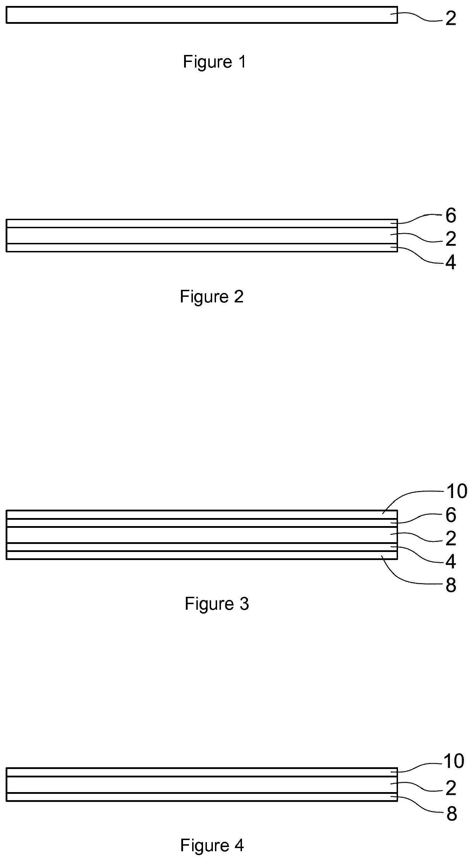

Fig. 1 illustrates a cross-sectional view of a composite film according to an embodiment of the present invention. According to the embodiment shown in Fig. 1, a polyethylene terephthalate containing composite film 2 is provided, which comprises inorganic mineral powder, polyethylene terephthalate (PET), an auxiliary plastic, and an auxiliary agent.

The polyethylene terephthalate used in the composite film of the present invention is similar to the pulp in the wood pulp paper in function and can be used as the main component of synthetic paper. Since the composite film of the present invention can be applied to synthetic paper, the demands for wood pulp paper can be reduced, thereby avoiding cutting trees and affecting the earth's ecology. In the present invention, the polyethylene terephthalate is used to replace the conventional wood pulp for providing similar or improved synthetic paper, so the present invention is beneficial to environmental protection while satisfying the need for paper marketing. Moreover, in the situations that most commercially available liquid beverages are packaged in bottles formed by polyethylene terephthalate (PET bottles), and the bottles are usually discarded everywhere after drinking, which result in environmental pollution, the incorporation of the polyethylene terephthalate into the composite film, which can be used as synthetic paper, can offer the chance to reuse the discarded PET bottles, so as to reduce the environmental pollution caused by the discarded PET bottles. In an embodiment of the present invention, the polyethylene terephthalate is preferably film grade polyethylene terephthalate.

In addition, the addition of polyethylene terephthalate provides the composite film, which can be used as the synthetic paper, with similar properties to the wood pulp paper, such as the foldability, rigidity, flattening characteristic, opacity, gloss, and writing properties by ball-point pen, pencil and water-based pen; with good printability; and being suitable for printing of printer or fax machines. Compared to the traditional wood pulp paper, the polyethylene terephthalate containing composite film, which can be used as the synthetic paper, has better stiffness and improved heat resistance.

According to one embodiment of the present invention, the polyethylene terephthalate is present in an amount of about 5 wt% to about 45 wt%, about 5 wt% to about 40 wt%, about 5 wt% to about 35 wt%, about 5 wt% to about 30 wt%, about 5 wt% to about 25 wt%, about 5 wt% to about 24 wt%, about 5 wt% to about 20 wt%, about 5 wt% to about 15 wt%, or about 5 wt% to about 10 wt%; preferably about 9 wt% to about 25 wt%; and most preferably about 10 wt% to about 24 wt%, based on the total weight of the composite film.

The inorganic mineral powder in the composite film of the present invention can be used to replace a part of the polyethylene terephthalate. In other words, the use of the inorganic mineral powder in the composite film can decrease the amount of polyethylene terephthalate, thereby reducing the total amount of plastic materials in the composite film and further increasing the decomposition effects of the composite film and products thereof (such as paper). Therefore, the composite film and produces thereof of the present invention are more environmentally friendly. Moreover, since the inorganic minerals are mostly natural substances, after the composite film and products thereof according to the present invention are decomposed, the residue of the inorganic mineral powder is easy to be accepted by the environment. On the other hand, since the composite film of the present invention comprises the inorganic mineral powder, the film will normally crack and crash within one year under sun exposure.

According to one embodiment of the present invention, the inorganic mineral powder includes, but is not limited to, calcium carbonate, magnesium carbonate, calcium sulfate, barium sulfate, kaolin, mica powder, zinc oxide, dolomite powder, calcium silicate, glass fibers, hollow glass beads, silica powder, chalk powder, talc powder, pigments, titanium dioxide, bentonite, white clay, diatomaceous earth, and combinations thereof. The inorganic mineral powder that is suitable for use in the present invention can be calcined or non-calcined. The inorganic mineral powder is preferably selected from calcium carbonate, magnesium carbonate, calcium silicate, and combinations thereof. In an embodiment of the present invention, the inorganic mineral powder comprises about 80% inorganic mineral powder having a particle size of about 4 µm to about 8 µm or about 100% inorganic mineral powder having a particle size of about 4 µm to about 20 µm.

In the present invention, the amount of the inorganic mineral powder in the composite film is relevant to that of the polyethylene terephthalate. If the amount of the inorganic mineral powder is increased, the amount of the polyethylene terephthalate can be decreased. Likewise, if the amount of the inorganic mineral powder is decreased, the amount of the polyethylene terephthalate can be increased. In an embodiment of the present invention, the inorganic mineral powder is present in an amount of about 45 wt% to about 80 wt%, about 45 wt% to about 78 wt%, about 45 wt% to about 76 wt%, about 45 wt% to about 74 wt%, about 45 wt% to about 72 wt%, about 45 wt% to about 70 wt%, or about 45 wt% to about 68 wt%; preferably about 45 wt% to about 79 wt%; and most preferably about 50 wt% to about 78 wt%, based on the total weight of the composite film.

The auxiliary plastic used in the composite film of the present invention is used for bonding with the inorganic mineral powder, and also provides functions that are similar as the wood pulp in the wood pulp paper. In an embodiment of the present invention, the auxiliary plastic includes, but is not limited to, high density polyethylene (HDPE), low density polyethylene (LDPE), polypropylene (PP), polystyrene (PS), and combinations thereof; and the polypropylene is preferably film grade polypropylene, the high density polyethylene is preferably film grade high density polyethylene, and the low density polyethylene is preferably film grade low density polyethylene or film grade linear low density polyethylene.

According to one embodiment of the present invention, the auxiliary plastic is present in an amount of about 9 wt% to about 10 wt%, about 9 wt% to about 11.5 wt%, about 9 wt% to about 13 wt%, about 9 wt% to about 14.5 wt%, about 9 wt% to about 16 wt%, about 9 wt% to about 17.5 wt%, about 9 wt% to about 19 wt%, about 9 wt% to about 20.5 wt%, about 9 wt% to about 22 wt%, about 9 wt% to about 23.5 wt%, about 9 wt% to about 24 wt%, or about 9 wt% to about 25 wt%; preferably about 9 wt% to about 25 wt%; and most preferably about 10 wt% to about 24 wt%, based on the total weight of the composite film.

The auxiliary agent used in the composite film of the present invention is mainly used to improve the desired properties of the composite film. In an embodiment of the present invention, the auxiliary agent includes, but is not limited to, a slip agent (dispersant), a coupling agent, and an antistatic agent. The slip agent can be calcium stearate, zinc stearate, magnesium stearate, oleyl palmitamide, or combinations thereof. The coupling agent can be β-(3,4-epoxycyclohexyl) ethyltrimethoxysilane. The antistatic agent can be N,N-bis (2-hydroxyethyl) stearylamine, N,N-bis (2-hydroxyethyl) coconut amine, or combinations thereof. According to one embodiment of the present invention, the auxiliary agent is present in an amount of about 0.5 wt% to about 1 wt%, about 0.5 wt% to about 1.5 wt%, about 0.5 wt% to about 2 wt%, about 0.5 wt% to about 2.5 wt%, about 0.5 wt% to about 3 wt%, about 0.5 wt% to about 3.5 wt%, about 0.5 wt% to about 4 wt%, about 0.5 wt% to about 4.5 wt%, about 0.5 wt% to about 5 wt%, or about 0.5 wt% to about 5.5 wt%; preferably about 0.5 wt% to about 5 wt%; particular preferably about 0.5 wt% to about 3 wt%; and most preferably about 1 wt% to about 2 wt%, based on the total weight of the composite film.

According to one embodiment of the present invention, the composite film can be applied to paper, leather products (such as wallets and purses), masks, etc. The paper includes, but is not limited to, culture paper (used for information transmission or cultural heritage, such as coated art paper, light coated paper, dowling paper, newsprint paper, tag paper, and bible paper, etc.), industrial paper (used to manufacture paper or paperboard of cartons, trays, cups or plates, such as kraft paperboard, corrugated paper, coated white board, coated gray board, etc.), packaging paper (used for making paper bags, shopping bags or paper tape bags, such as cellophane, wrapping paper, kraft paper for bags, etc.), and information paper (for example, paper for use in printer or fax machines, such as non-carbon copy paper, photocopy paper, computer report paper, thermal recording paper, electrostatic recording paper, etc.).

According to one embodiment of the present invention, the composite film is suitable for use in gravure printing, letterpress printing, lithography printing, screen printing, commercially used eight-color high-speed double-sided rotary printing, etc. In addition, the composite film can be applied to various plastic film products (such as PP, PE and PET).

Fig. 2 illustrates a cross-sectional view of a composite film according to another embodiment of the present invention. As shown in Fig.2, one or more plastic layers 4 and 6 are further disposed on an upper surface and/or a lower surface of the composite film 2, respectively. The plastic layers can be the same or different and independently comprise polyethylene terephthalate and similar materials.

Fig. 3 illustrates a cross-sectional view of a composite film according to another embodiment of the present invention. As shown in Fig.3, one or more functional coating layers 8 and 10 are further disposed on an upper surface and/or a lower surface of the plastic layers 4 and 6 of the composite film 2 illustrated in Fig. 2, respectively. The functional coating layers can be the same or different and independently include, but are not limited to, an antistatic coating or an ink absorbing coating.

Fig. 4 illustrates a cross-sectional view of a composite film according to another embodiment of the present invention. As shown in Fig.4, one or more functional coating layers 8 and 10 are further disposed on an upper surface and/or a lower surface of the composite film 2 illustrated in Fig. 1, respectively. The functional coating layers can be the same or different and independently include, but are not limited to, an antistatic coating and an ink absorbing coating.

In an embodiment of the present invention, the method of preparing the aforementioned composite film comprises the steps of (1) internally mixing inorganic mineral powder, polyethylene terephthalate, an auxiliary plastic, and an auxiliary agent to form a composite soft material; (2) configuring the composite soft material to be in a sheet shape; and (3) stretching the composite soft material to form the composite film.

In Step (1), the inorganic mineral powder, the polyethylene terephthalate, the auxiliary plastic (such as HDPE and PP), and the auxiliary agent in respective proportions can be separately fed to an inlet of an internal mixer; the weight proportions of the components can be controlled by using a four-in-one digital automatic controller. The mixture can be heated by using two rotors of the internal mixer in the first stage heating process (about 180°C to about 230°C) and mixed uniformly, and then heated in the second stage (about 220°C to about 255°C). During the heating processes, the polyethylene terephthalate and the auxiliary plastic will be melted to be a hot melt plastic, which will be stirred with the inorganic mineral powder. Thereafter, the mixture can be squeezed and kneaded to form a composite soft material.

In Step (2), the composite soft material of Step (1) can be fed into an extruder for configuring the material to be in a sheet shape. The composite soft material can be extruded into the middle channel of the three-layer T-shaped die by using a screw of the extruder. The middle channel can be in the shape of a hanger, so the discharge of the composite soft material can be uniformly fed into a sheet-shaped nozzle. At the same time, additional melting plastics (such as PET plastics) can be respectively extruded into an upper channel and a lower channel, which may be in the shape of a hanger, of the three-layer T-shaped die by using two sub-extruders or a double-screw extruder, and pushed into the sheet-shaped nozzle of the three-layer T-shaped die. The three layers can be combined together to form a three-layer sheet-shaped composite soft material (as shown in Fig. 2). On the other hand, the two sub-extruders or the double-screw extruder can be powered off so that the sheet-shaped composite soft material does not comprise PET plastics on its surfaces and thus is only a single layer.

In Step (3), the sheet-shaped composite soft material of Step (3) can be introduced into a film forming apparatus for stretching. The sheet-shaped composite softening material can be introduced into a longitudinal stretching machine and can be longitudinally stretched by a plurality of pairs of longitudinal stretch rolls to become, for example, about 4 to about 6.5 times the original dimension. The material can be further introduced into a transverse stretching machine and can be transversely stretched to become, for example, about 4 to about 6.5 times the original dimension so as to form a biaxially stretched composite film. The composite film can also be either longitudinally or transversely stretched only. However, if the composite film is only mechanically (longitudinally) stretched, but not horizontally (transversely) stretched, the longitudinal arrangement of the molecules will be in a straight line, so the longitudinal strength will be stronger than the transverse strength of the composite film. Such composite film can be easily torn off only via a weak horizontal tearing force, so this kind of uniaxially stretched composite film is suitable for use as packages for dry foods. On the other hand, if such composite film is further transversely stretched, the longitudinal tension and the transversal tension of the composite film would be balanced. This kind of biaxially stretched composite film is suitable for applying to paper or packages with high strength requirement.

After that, the stretched composite film can be introduced into a double-sided coating machine for coating with functional coating layers. After the surface of the composite film is corona treated, a double-sided coating solution can be applied to the composite film. The composite film can be dried and wound by using a winding machine so as to form a biaxially stretched composite film. The thickness of the composite film can be in the range of about 50 µm to about 160 µm, and the density of the composite film can be in the range of about 0.70 g/cm³ to about 1.2 g/cm³.

The following embodiments are used to further describe the present invention and do not limit the scope of the present invention. All modifications and variations, which can be easily made by any persons of skill in the art, fall within the disclosure of this specification and the scope of the appended claims.

### Examples

### Preparation Example 1

Four materials of inorganic mineral powder, recycled PET plastics, recycled PP plastics, and an auxiliary agent were respectively pumped under negative pressure through four different stainless pipes into four different metering tanks for inorganic mineral powder, recycled PET plastics, recycled PP plastics, and auxiliary agent for storage. The formulation comprises about 78 kg (about 78 wt%) inorganic mineral powder, about 10 kg (about 10 wt%) recycled PET plastics, about 10 kg (about 10 wt%) recycled PP plastics, and about 2 kg (about 2 wt%) auxiliary agent, and the total weight of the formulation is about 100 kg.

A predetermined amount of each material was separately transferred by digitally controlling a set of screws, and the four materials were all fed to an inlet of an internal mixer for preparing a composite soft material. The feed was continuously supplied. The four materials were supplied in a total amount of about 2360 kg per hour. The internal mixer was continuously operating, and the rotational speed of two rotors of the internal mixer was digitally controlled to be about 378 rotations per minute (rpm). In the first stage of the internal mixer, the heating temperature was digitally controlled at about 220°C, and in the second stage of the internal mixer, the heating temperature was digitally controlled at about 240°C. The discharge amount from the internal mixer was about 2360 kg per hour. The discharge was then fed into a main extruder for extrusion, while the other two subextruders are powered off.

The discharge amount through the nozzle of the middle channel of the three-layer T-shape die of the main extruder was about 2360 kg per hour. After the composite soft material from the nozzle of the middle channel of the three-layer T-shape die was configured to be a sheet shape, it was longitudinally stretched to form a composite film. After being longitudinally stretched, the composite film has a width of about 770 mm and an average thickness of about 0.552 mm, as measured by infrared thickness gauge.

The composite soft material was further transversely stretched. After being transversely stretched and trimming the scrap, the composite film has a width of about 4600 mm, an average thickness of about 0.092 mm (92 µm), and a density of about 0.81 g/cm³. The linear velocity of the transverse stretching process was about 102 m per minute.

Thereafter, the biaxially stretched composite film was coated with a double-sided coating solution. After drying, the thickness of the coated composite film was increased to about 0.1 mm (100 µm), and the density of the film is about 0.78 g/cm . Then, the coated composite film was trimmed to remove scrap and was wound by using a winding machine. The width of the resultant composite film is about 4580 mm. In this preparation example, the yield of the composite film is about 2186 kg per hour.

### Preparation Example 2

Four materials of inorganic mineral powder, recycled PET plastics, recycled PP plastics, and an auxiliary agent were respectively pumped under negative pressure through four different stainless pipes into four different metering tanks for inorganic mineral powder, recycled PET plastics, recycled PP plastics, and auxiliary agent for storage. The formulation comprises about 78 kg (about 78 wt%) inorganic mineral powder, about 10 kg (about 10 wt%) recycled PET plastics, about 10 kg (about 10 wt%) recycled PP plastics, and about 2 kg (about 2 wt%) auxiliary agent, and the total weight of the formulation is about 100 kg.

A predetermined amount of each material was separately transferred by digitally controlling a set of screws, and the four materials were all fed to an inlet of an internal mixer for preparing a composite soft material. The feed was continuously supplied. The four materials were supplied in a total amount of about 2360 kg per hour. The internal mixer was continuously operating, and the rotational speed of two rotors of the internal mixer was digitally controlled to be about 378 rotations per minute (rpm). In the first stage of the internal mixer, the heating temperature was digitally controlled at about 230°C, and in the second stage of the internal mixer, the heating temperature was digitally controlled at about 255°C. The discharge amount from the internal mixer was about 2360 kg per hour. The discharge was then fed into a main extruder for extrusion, while the other two subextruders are powered off.

The discharge amount through the nozzle of the middle channel of the three-layer T-shape die of the main extruder was about 2360 kg per hour. After the composite soft material from the nozzle of the middle channel of the three-layer T-shape die was configured to be a sheet shape, it was longitudinally stretched to form a composite film. After being longitudinally stretched, the composite film has a width of about 760 mm and an average thickness of about 0.453 mm, as measured by infrared thickness gauge.

The composite soft material was further transversely stretched. After being transversely stretched and trimming the scrap, the composite film has a width of about 4600 mm, an average thickness of about 0.072 mm (72 µm), and a density of about 0.735 g/cm³. The linear velocity of the transverse stretching process was about 142 m per minute.

Thereafter, the biaxially stretched composite film was coated with a double-sided coating solution. After drying, the thickness of the coated composite film was increased to about 0.08 mm (80 µm), and the density of the film is about 0.70 g/cm . Then, the coated composite film was trimmed to remove scrap and was wound by using a winding machine. The width of the resultant composite film is about 4580 mm. In this preparation example, the yield of the composite film is about 2185 kg per hour.

### Preparation Example 3

Four materials of inorganic mineral powder, recycled PET plastics, recycled PP plastics, and an auxiliary agent were respectively pumped under negative pressure through four different stainless pipes into four different metering tanks for inorganic mineral powder, recycled PET plastics, recycled PP plastics, and auxiliary agent for storage. The formulation comprises about 78 kg (about 78 wt%) inorganic mineral powder, about 10 kg (about 10 wt%) recycled PET plastics, about 10 kg (about 10 wt%) recycled PP plastics, and about 2 kg (about 2 wt%) auxiliary agent, and the total weight of the formulation is about 100 kg.

A predetermined amount of each material was separately transferred by digitally controlling a set of screws, and the four materials were all fed to an inlet of an internal mixer for preparing a composite soft material. The feed was continuously supplied. The four materials were supplied in a total amount of about 2000 kg per hour. The internal mixer was continuously operating, and the rotational speed of two rotors of the internal mixer was digitally controlled to be about 320 rotations per minute (rpm). In the first stage of the internal mixer, the heating temperature was digitally controlled at about 220°C, and in the second stage of the internal mixer, the heating temperature was digitally controlled at about 240°C. The discharge amount from the internal mixer was about 2000 kg per hour. The discharge was then fed into a main extruder for extrusion.

Two groups of about 9 kg recycled PET plastics were digitally controlled at the same time and respectively fed into two sets of subextruders for extruding the recycled PET plastics at a speed of about 180 kg per hour. The rotational speed of the screws was about 50 rotations per minute. The discharge of the two subextruders was about 360 kg per hour in total, the discharge of the main extruder was about 2000 kg per hour, and thus the total amount of a three-layer sheet-shaped composite soft material from the nozzle of the three-layer T-shaped die was about 2360 kg per hour.

After the composite soft material from the nozzle of the middle channel of the three-layer T-shape die was configured to be a sheet shape, it was longitudinally stretched to form a composite film. After being longitudinally stretched, the three-layer sheet-shaped composite film has a width of about 770 mm and an average thickness of about 0.552 mm, as measured by infrared thickness gauge.

The three-layer composite soft material was further transversely stretched. After being transversely stretched and trimming the scrap, the composite film has a width of about 4600 mm, an average thickness of about 0.092 mm (92 µm), and a density of about 0.83 g/cm³. The linear velocity of the transverse stretching process was about 101 m per minute.

Thereafter, the biaxially stretched composite film was coated with a double-sided coating solution. After drying, the thickness of the coated composite film was increased to about 0.1 mm (100 µm), and the density of the film is about 0.50 g/cm . Then, the coated composite film was trimmed to remove scrap and was wound by using a winding machine. The width of the resultant composite film is about 4580 mm. In this preparation example, the yield of the composite film is about 2220 kg per hour.

### Preparation Example 4

Four materials of inorganic mineral powder, recycled PET plastics, recycled HDPE plastics, and an auxiliary agent were respectively pumped under negative pressure through four different stainless pipes into four different metering tanks for inorganic mineral powder, recycled PET plastics, recycled HDPE plastics, and auxiliary agent for storage. The formulation comprises about 78 kg (about 78 wt%) inorganic mineral powder, about 10 kg (about 10 wt%) recycled PET plastics, about 10 kg (about 10 wt%) recycled HDPE plastics, and about 2 kg (about 2 wt%) auxiliary agent, and the total weight of the formulation is about 100 kg.

A predetermined amount of each material was separately transferred by digitally controlling a set of screws, and the four materials were all fed to an inlet of an internal mixer for preparing a composite soft material. The feed was continuously supplied. The four materials were supplied in a total amount of about 2000 kg per hour. The internal mixer was continuously operating, and the rotational speed of two rotors of the internal mixer was digitally controlled to be about 310 rotations per minute (rpm). In the first stage of the internal mixer, the heating temperature was digitally controlled at about 220°C, and in the second stage of the internal mixer, the heating temperature was digitally controlled at about 240°C. The discharge amount from the internal mixer was about 2000 kg per hour. The discharge was then fed into a main extruder for extrusion.

Two groups of about 9 kg recycled PET plastics were digitally controlled at the same time and respectively fed into two sets of subextruders for extruding the recycled PET plastics at a speed of about 180 kg per hour. The rotational speed of the screws was about 50 rotations per minute. The discharge of the two subextruders was about 360 kg per hour in total, the discharge of the main extruder was about 2000 kg per hour, and thus the total amount of a three-layer sheet-shaped composite soft material from the nozzle of the three-layer T-shaped die was about 2360 kg per hour.

After the composite soft material from the nozzle of the middle channel of the three-layer T-shape die was configured to be a sheet shape, it was longitudinally stretched to form a composite film. After being longitudinally stretched, the three-layer sheet-shaped composite film has a width of about 770 mm and an average thickness of about 0.552 mm, as measured by infrared thickness gauge.

The three-layer composite soft material was further transversely stretched. After being transversely stretched and trimming the scrap, the composite film has a width of about 4600 mm, an average thickness of about 0.092 mm (92 µm), and a density of about 0.85 g/cm³. The linear velocity of the transverse stretching process was about 101 m per minute.

Thereafter, the biaxially stretched composite film was coated with a double-sided coating solution. After drying, the thickness of the coated composite film was increased to about 0.1 mm (100 µm), and the density of the film is about 0.82 g/cm³. Then, the coated composite film was trimmed to remove scrap and was wound by using a winding machine. The width of the resultant composite film is about 4580 mm. In this preparation example, the yield of the composite film is about 2276 kg per hour.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A polyethylene terephthalate containing composite film, comprising:
inorganic mineral powder;
polyethylene terephthalate;
an auxiliary plastic; and
an auxiliary agent,
wherein the polyethylene terephthalate is present in an amount of about 9 wt% to about 25 wt%, the inorganic mineral powder is present in an amount of about 45 wt% to about 79 wt%, and the auxiliary plastic is present in an amount of about 9 wt% to about 25 wt%, based on the total weight of the composite film.

2. The composite film according to Claim 1, wherein the inorganic mineral powder is selected from the group consisting of calcium carbonate, magnesium carbonate, calcium silicate, and combinations thereof.

3. The composite film according to either Claim 1 or Claim 2, wherein the inorganic mineral powder comprises about 80% inorganic mineral powder having a particle size of about 4 µm to about 8 µm.

4. The composite film according to any one of Claims 1 to 3, wherein the auxiliary plastic is selected from the group consisting of film grade polypropylene, film grade high density polyethylene, film grade low density polyethylene, film grade linear low density polyethylene, and combinations thereof.

5. A synthetic film comprising:
a composite film comprising:
inorganic mineral powder;
polyethylene terephthalate;
an auxiliary plastic; and
an auxiliary agent,
wherein the polyethylene terephthalate is present in an amount of about 9 wt% to about 25 wt%, the inorganic mineral powder is present in an amount of about 45 wt% to about 79 wt%, and the auxiliary plastic is present in an amount of about 9 wt% to about 25 wt%, based on the total weight of the composite film; and
one or more plastic layers disposed on an upper surface and/or a lower surface of the composite film.

6. The synthetic film according to Claim 5, wherein the plastic layer comprises polyethylene terephthalate.

7. The synthetic film according to either Claim 5 or Claim 6, further comprising one or more functional coating layers disposed on a surface of the plastic layer.

8. A synthetic film comprising:
a composite film comprising:
inorganic mineral powder;
polyethylene terephthalate;
an auxiliary plastic; and
an auxiliary agent,
wherein the polyethylene terephthalate is present in an amount of about 9 wt% to about 25 wt%, the inorganic mineral powder is present in an amount of about 45 wt% to about 79 wt%, and the auxiliary plastic is present in an amount of about 9 wt% to about 25 wt%, based on the total weight of the composite fil; and
one or more functional coating layers disposed on an upper surface and/or a lower surface of the composite film.

9. A method of preparing the composite film according to any of Claims 1 to 4 or the composite film as defined in any one of Claims 5 to 8, comprising:
(1) internally mixing the inorganic mineral powder, the polyethylene terephthalate, the auxiliary plastic, and the auxiliary agent to form a composite soft material;
(2) configuring the composite soft material to be in a sheet shape; and
(3) stretching the composite soft material to form a composite film.

10. The method according to Claim 9, wherein Step (1) comprises:
(1-1) mixing the inorganic mineral powder, the polyethylene terephthalate, the auxiliary plastic, and the auxiliary agent at a temperature of about 180°C to about 230°C; and
(1-2) melting the polyethylene terephthalate and the auxiliary plastic at a temperature of about 220°C to about 255°C, and internally mixing the melt and the inorganic mineral powder to form the composite soft material.

11. The method according to either Claim 9 or Claim 10, wherein Step (2) comprises:
introducing the composite soft material into an extruder with a three-layer T-shaped die, wherein the three-layer T-shaped die comprises an upper channel, a middle channel, and a lower channel, the composite soft material being introduced into the middle channel.

12. The method according to Claim 11, wherein:
(a) the middle channel is in the shape of a hanger; and/or
(b) wherein the upper channel and the lower channel are both in the shape of a hanger.

13. The method according to Claim 11 or Claim 12, further comprising forming a melt plastic on a surface of the composite film through the upper channel or the lower channel, optionally wherein the plastic comprises polyethylene terephthalate.

14. The method according to any one of Claims 9 to 13, further comprising disposing one or more plastic layers on an upper surface and/or a lower surface of the composite film, and wherein optionally:
(a) said method further comprises disposing one or more functional coating layers on a surface of the plastic layer; and/or
(b) the plastic layer comprises polyethylene terephthalate.

15. The method according to any one of Claims 9 to 14, wherein Step (3) comprises:
(3-1) longitudinally stretching the composite soft material to become about 4 to 6.5 times the original dimension; and
(3-2) transversely stretching the composite soft material to become about 4 to 6.5 times the original dimension.
